# EUROPÄISCHE PATENTSCHRIFT

(11) **EP 2 821 807 B1**
(45) Veröffentlichungstag und Bekanntmachung des Hinweises auf die Patenterteilung: **29.11.2017**
(21) Anmeldenummer: 14169062.8
(22) Anmeldetag: 20.05.2014
(51) Int. Cl.: B62D 15/02, G01S 5/26, G07C 9/00, G01S 15/02, G01S 15/93

(54) **Bestimmen einer Position einer einem Fahrzeug zugeordneten Vorrichtung**
Determining a position of a device associated with a vehicle
Déterminer une position d'un dispositif associé à un véhicule

(30) Priorität: 03.07.2013 DE 102013213029
(43) Veröffentlichungstag der Anmeldung: 07.01.2015
(73) Patentinhaber: Volkswagen Aktiengesellschaft, 38440 Wolfsburg (DE)
(72) Erfinder: Max, Dr. Stephan, 38518 Gifhorn (DE); Urban, Alexander, 38518 Gifhorn (DE); Prauße, Claudia, 38120 Braunschweig (DE)

(56) Entgegenhaltungen:
- EP-A2- 0 990 757
- WO-A2-2013/061268
- DE-C1- 19 711 901

## Beschreibung

Die vorliegende Erfindung betrifft ein Verfahren zum Bestimmen einer Position einer einem Fahrzeug zugeordneten Vorrichtung bezogen auf das Fahrzeug. Die Vorrichtung kann beispielsweise eine Fernbedienungsvorrichtung umfassen, welche außerhalb des Fahrzeugs verwendet wird, um Funktionen des Fahrzeugs aus der Ferne zu bedienen. Die vorliegende Erfindung betrifft ferner eine entsprechende Vorrichtung, welche dem Fahrzeug zugeordnet ist, sowie ein Fahrzeug mit einer dem Fahrzeug zugeordneten Vorrichtung.

Bei Fahrzeugen, wie z.B. Personenkraftwagen, Nutzfahrzeugen oder Lastkraftwagen, können verschiedene Funktionen mit einer Fernbedienung von einem Benutzer von außerhalb des Fahrzeugs betätigt werden. Derartige Funktionen können beispielsweise das Öffnen oder Schließen eines Verriegelungssystems des Fahrzeugs, das Öffnung und Schließen von Türen, einem Kofferraumdeckel oder einer Heckklappe, das Öffnen und Schließen von Fenstern des Fahrzeugs, das Öffnen oder Schließen eines Verdecks eines Cabriolets, ein autonomes Ein- und Ausparken des Fahrzeugs oder ein autonomes Folgen des Fahrzeugs umfassen. Eine derartige Fernbedienung kann beispielsweise in einen Schlüssel des Fahrzeugs integriert werden. Bei einer derartigen Fernbedienungsfunktion ist es häufig vorteilhaft, die Position des Benutzers in Bezug auf das Fahrzeug zu bestimmen. Unter der Annahme, dass der Benutzer des Fahrzeugs die Fernbedienung bzw. den Schlüssel mit der Fernbedienung in den Händen hält, kann die Position des Benutzers über die Position der Fernbedienung bestimmt werden. Beispielsweise können in Abhängigkeit von der Position des Benutzers zu dem Fahrzeug entsprechende Türen oder eine Heckklappe des Fahrzeugs geöffnet oder geschlossen werden oder sichergestellt werden, dass beispielsweise bei einem autonomen Einparkvorgang der Benutzer sich in einer geeigneten Entfernung und Position zu dem Fahrzeug befindet, um den autonomen Einparkvorgang oder das autonome Bewegen des Fahrzeugs zu überwachen.

Bisherige Fernbedienungssystem oder Schlüsselsysteme sind in der Lage, die Fernbedienung oder den Schlüssel im Umfeld grob zu bestimmen. Beispielsweise können mittels unterschiedlicher Funkantennen am Fahrzeug unterschiedliche Bereiche im Umfeld des Fahrzeugs ausgeleuchtet werden, und anhand dieser Information die Position der Fernbedienung oder des Schlüssels grob bestimmt werden. Reichweitenaussagen sind jedoch nur ungenau möglich, sodass eine hinreichend genaue Ortung des Benutzers nicht möglich ist.

In diesem Zusammenhang offenbart die DE 100 04 213 A1 ein Verfahren zur Steuerung der Bewegung von mindestens einem elektromotorisch bewegten Teil eines Motor-angetriebenen Fahrzeugs, beispielsweise zur Steuerung eines Schließvorgangs einer Seitenscheibe des Kraftfahrzeugs. Bei einem Bedienerwunsch zur Bewegung des elektromotorisch bewegten Teils wird eine bidirektionale Signalübertragung zwischen einer Fernsteuereinheit und dem Fahrzeug mittels kodierter Übertragungssignale vorgenommen. Die Signallaufzeit als Zeitdifferenz zwischen bestimmten Übertragungssignalen wird ermittelt und ausgewertet. Bei dem elektromotorisch bewegten Teil wird anhand der Auswertung der Signallaufzeit eine Entscheidung über die Freigabe der Bewegung des elektromotorisch bewegten Teils getroffen.

Die WO 2013/061268 A2 betrifft ein Verfahren zur genauen Ortsbestimmung in einem bestimmten Bereich. In einem Raum sind mehrere Schallquellen angeordnet. Nach einem Empfang eines Synchronisationssignals sendet jede Schallquelle ein Schallsignal entweder sofort oder nach einer vorbestimmten Verzögerungsdauer aus. Ein Kalibrierungsempfänger, welcher an einem bestimmten Kalibrierungspunkt in dem Raum angeordnet ist, empfängt die Schallsignale von einigen oder allen Schallquellen. Auf der Grundlage der empfangenen Schallsignale erzeugt der Kalibrierungsempfänger ein Kalibrierungsprofil für den Kalibrierungspunkt. Das Verfahren wird für mehrere Kalibrierungspunkte fortgesetzt. Ein Kundenempfänger, welcher an einem Punkt in dem Raum angeordnet ist, empfängt Schallsignale von einigen oder allen Schallquellen. Der Kundenempfänger erzeugt ein Kundenprofil für den Punkt und berechnet eine Ähnlichkeit des Kundenprofils mit jedem Kalibrierungsprofil. Auf der Grundlage der Ähnlichkeit bestimmt der Kundenempfänger seine Position.

Die EP 0 990 757 A2 betrifft eine Vorrichtung für Kraftfahrzeuge zur Benutzeridentifikation mit einer in einem Transponder angeordneten Sende-/Empfangseinheit für eine Transponder-Fahrzeug-Kommunikation und mit Mitteln zum Erkennen der Position des Transponders innerhalb oder außerhalb des Fahrzeugs. Zur Positionsbestimmung des Transponders werden unabhängig von den Benutzeridentifikationssignalen ausgesendete Ultraschallsignale genutzt, welche nur innerhalb des Fahrzeuginnerraums empfangbar sind.

Die DE 10 2005 003 452 A1 betrifft ein System zur Fahrzeuglokalisation mit einer Fahrzeugseitigen Sendeeinrichtung zum Aussenden mehrerer gerichteter kodierter Sendesignale in bezogen auf das Kraftfahrzeug unterschiedliche Senderichtungen, deren Kodierung eine Information über die ermittelte Ausrichtung des Kraftfahrzeugs und jeweils eine Sendeeinrichtung-spezifische Information enthält, und mit einem eine Empfangseinrichtung enthaltenden elektronischen Schlüssel zum Empfangen und Dekodieren eines von der Sendeeinrichtung gesendeten Signals, der ein Auswerten einer Information über die Ausrichtung des Schlüssels sowie der im empfangenen Sendesignal enthaltenen Information vornimmt und daraus Richtungsinformationen über die aktuelle Position des Schlüssels zu der aktuellen Position des Kraftfahrzeugs ermittelt und ausgibt.

Die DE 10 2009 006 975 A1 betrifft einen Fahrzeugschlüssel zur Funkkommunikation mit einem Fahrzeug. Der Fahrzeugschlüssel weist einen Funksender zur Übertragung von Funksignalen an das Fahrzeug auf. Um eine Ortung des Fahrzeugs im Nahbereich durchführen zu können, ist vorgesehen, dass der Fahrzeugschlüssel einen Funkempfänger und/oder einen akustischen Empfänger aufweist. Durch den Funkempfänger und/oder den akustischen Empfänger und den Funksender wird eine bidirektionale Kommunikation mit einer Sende- und Empfangseinrichtung des Fahrzeugs eingerichtet.

Die US 2008/0033603 A1 betrifft ein System zum automatischen Führen eines Motorfahrzeugs in eine Zielposition. Das System umfasst ein Sensorsystem und eine Analyseeinheit zum Bestimmen der Position des Motorfahrzeugs relativ zu der Zielposition sowie Vorrichtungen zum Planen einer kollisionsfreien Fahrt von der aktuellen Position zu der Zielposition und Vorrichtungen zum Ausführen der geplanten Fahrt. Ein erster Teil des Sensorsystems ist an dem Motorfahrzeug angeordnet und ein zweiter Teil des Sensorsystems ist stationär an einer definierten Position nahe der Zielposition angeordnet. Ein autonomer Einparkvorgang kann mittels einer Fernbedienung von einer Bedienperson, welche außerhalb des Fahrzeugs angeordnet ist, ausgelöst oder gesteuert werden.

Die DE 20 2008 018 157 U1 betrifft einen Garagenassistenten zur Einparkunterstützung eines Fahrzeugs in eine Garage oder eine Parklücke mit einer Umfeldsensorik zur automatischen Erfassung von Raumverhältnissen und einer Fernsteuerung zum Aktivieren eines Einparkvorgangs. Der Einparkvorgang ist über eine drahtlose Schnittstelle visuell auf ein mobiles Endgerät übertragbar.

Die DE 10 2010 023 162 A1 betrifft ein Verfahren zum Unterstützen eines Fahrers eines Kraftfahrzeugs beim Einparken in eine Parklücke. In einem Lernmodus werden Referenzdaten über einen Umgebungsbereich der Parklücke mithilfe einer Sensoreinrichtung einer Fahrerassistenzeinrichtung erfasst und abgespeichert, während das Kraftfahrzeug durch den Fahrer gesteuert in die Parklücke eingeparkt wird. Im Lernmodus wird außerdem eine Referenzzielposition durch die Fahrerassistenzeinrichtung erfasst, welche im Lernmodus durch das Kraftfahrzeug erreicht wird. Im nachfolgenden Betriebsmodus werden Sensordaten durch die Sensoreinrichtung erfasst und mit den Referenzdaten verglichen. Abhängig von diesem Vergleich wird der Umgebungsbereich der Parklücke anhand der erfassten Sensordaten erkannt und es wird eine aktuelle Position des Kraftfahrzeugs relativ zur Referenzzielposition bestimmt. Abhängig von der aktuellen Position des Kraftfahrzeugs relativ zur Referenzzielposition wird eine Parkbahn durch die Fahrerassistenzeinrichtung festgelegt, entlang welcher das Fahrzeug aus der aktuellen Position heraus in die Parklücke eingeparkt wird.

Die EP 2 455 779 A1 betrifft eine Ultraschall-basierte Richtungsbestimmung von Objekten in einer Fahrzeugumgebung. Dabei wird ein Messsignal ausgesendet und mehrere Reflektionen des Messsignals durch eine Mehrzahl von Ultraschallsensoren empfangen. Die Richtung zum Objekt wird durch eine Triangulationsberechnung basierend auf den empfangenen Reflektionen bestimmt. Jeder der Ultraschallsensoren arbeitet basierend auf einem individuellen Taktgeber. Die Messung wird gemäß einem für die Mehrzahl der Ultraschallsensoren gemeinsamen vorgegebenen Zeitschema durchgeführt.

Aufgabe der vorliegenden Erfindung ist es, eine Position einer Vorrichtung, insbesondere einer Fernbedienungsvorrichtung, welche einem Fahrzeug zugeordnet ist, in Bezug auf das Fahrzeug mit hoher Genauigkeit zu bestimmen.

Diese Aufgabe wird gemäß der vorliegenden Erfindung durch ein Verfahren zum Bestimmen einer Position einer einem Fahrzeug zugeordneten Vorrichtung bezogen auf das Fahrzeug nach Anspruch 1, und ein Fahrzeug mit einer dem Fahrzeug zugeordneten Vorrichtung nach Anspruch 7 gelöst. Die abhängigen Ansprüche definieren bevorzugte und vorteilhafte Ausführungsformen der Erfindung.

Gemäß der vorliegenden Erfindung wird ein Verfahren zum Bestimmen einer Position einer Vorrichtung bereitgestellt. Die Vorrichtung ist einem Fahrzeug zugeordnet und die Position wird bezogen auf das Fahrzeug bestimmt. Bei dem Verfahren werden mehrere Ultraschallsignale von dem Fahrzeug in einer vorgegebenen zeitlichen Reihenfolge ausgesendet. Die mehreren Ultraschallsignale werden von mehreren unterschiedlichen Sendepositionen an dem Fahrzeug ausgesendet. Anders ausgedrückt, sind an dem Fahrzeug mehrere Sendepositionen vorgesehen und von jeder Sendeposition wird ein entsprechendes Ultraschallsignal ausgesendet. Dabei werden diese Ultraschallsignale in der vorgegebenen zeitlichen Reihenfolge ausgesendet. Die mehreren von dem Fahrzeug ausgesendeten Ultraschallsignale werden an der Vorrichtung empfangen und die Position der Vorrichtung in Bezug auf das Fahrzeug wird in Abhängigkeit von den empfangenen Ultraschallsignalen und der vorgegebenen zeitlichen Reihenfolge bestimmt. Die zeitliche Reihenfolge stellt ein Sendemuster dar, mit welchem die Ultraschallsignale von dem Fahrzeug ausgesendet werden. Ein derartiges Sendemuster kann auch als eine Schussfolge oder eine zeitliche Kodierung der Ultraschallsignale des Fahrzeugs bezeichnet werden. Beispielsweise können die Ultraschallsignale von den ihnen zugeordneten Sendepositionen in einer vorgegebenen Reihenfolge der Reihe nach ausgesendet werden, wobei jedes der Ultraschallsignale eine bestimmte Signaldauer aufweist. Zwischen jedem der Ultraschallsignale wird eine bestimmte Sendepause eingelegt. Beispielsweise können die Ultraschallsignale zyklisch in der vorgegebenen zeitlichen Reihenfolge ausgesendet werden, wobei nach jedem Zyklus eine längere Pause und zwischen jedem der Ultraschallsignale eine kürzere Pause eingelegt wird. Die Ultraschallsignale können ferner ein Fahrzeug-individuelles Kennzeichen, wie z.B. eine Frequenz, eine Frequenzfolge, eine Modulation oder eine digital aufmodulierte Information als Frequenz oder Amplitudenmodulation aufweisen. Die Vorrichtung, welche die mehreren Ultraschallsignale empfängt, ist eine von dem Fahrzeug getrennte Vorrichtung, wie z.B. eine Fernbedienung oder ein Funkschlüssel. Bei dem Verfahren befindet sich die Vorrichtung vorzugsweise außerhalb des Fahrzeugs, um die Position der Vorrichtung und somit eines Benutzers, welcher die Vorrichtung verwendet, bezogen auf das Fahrzeug zu bestimmen. Über die vorgegebene zeitliche Reihenfolge, mit welcher die mehreren Ultraschallsignale von dem Fahrzeug ausgesendet werden und welche in der Vorrichtung hinterlegt ist, kann sich die Vorrichtung auf die von dem Fahrzeug ausgesendete Folge von Ultraschallsignalen aufsynchronisieren und daher ist keine weitere Kommunikation zwischen dem Fahrzeug und der Vorrichtung erforderlich. Anhand der unterschiedlichen Sendepositionen, von denen die Ultraschallsignale an dem Fahrzeug ausgesendet werden und welche der Vorrichtung bekannt sind, kann unter Verwendung von Laufzeitunterschieden der empfangenen Ultraschallsignale eine sehr genaue Positionsbestimmung der Vorrichtung bezogen auf das Fahrzeug durchgeführt werden.

An jeder der mehreren Sendepositionen ist jeweils ein Ultraschallsender angeordnet. Das Aussenden der mehreren Ultraschallsignale erfolgt durch ein Ansteuern der Ultraschallsender in der vorgegebenen zeitlichen Reihenfolge. Die Ultraschallsender sind an der Außenseite des Fahrzeugs angebracht und dienen zusätzlich als Ultraschallsignalquellen für ein Abstandswarnsystem des Fahrzeugs. Ultraschallsender werden in der Fahrzeugtechnik in verschiedenen Bereichen, beispielsweise als Abstandssensoren bei Einparkhilfesystemen, verwendet. Daher beruht das Verfahren auf in der Fahrzeugtechnik bewährten Technologien und kann kostengünstig realisiert werden.

Bei einer weiteren Ausführungsform ist die vorgegebene zeitliche Reihenfolge derart ausgestaltet, dass die Ultraschallsender einzeln und zu unterschiedlichen Zeiten angesteuert werden. Dadurch können gegenseitige Beeinflussungen und Störungen der Ultraschallsender vermieden werden, sodass die Vorrichtung die Ultraschallsignale einzeln empfangen kann und somit den einzelnen Ultraschallsendern und zugeordneten Sendepositionen eindeutig zuordnen kann. Dadurch kann eine robuste und genaue Positionsbestimmung der Vorrichtung bezogen auf das Fahrzeug sichergestellt werden.

Anhand der Signallaufzeiten und Differenzen zwischen den Signallaufzeiten der Ultraschallsignale kann beispielsweise eine Entfernung zwischen der Vorrichtung und dem Fahrzeug bestimmt werden. Alternativ oder zusätzlich kann eine Richtung, in welcher die Vorrichtung bezogen auf ein dem Fahrzeug zugeordnetes Koordinatensystem angeordnet ist, bestimmt werden. Zusätzlich kann die Vorrichtung einen richtungssensitiven Ultraschallempfänger aufweisen, sodass alternativ oder zusätzlich auch eine Ausrichtung der Vorrichtung bezogen auf eine Richtung von der Vorrichtung zu dem Fahrzeug bestimmt werden kann, d.h., es kann z.B. bestimmt werden, ob die Vorrichtung in Richtung des Fahrzeugs gehalten wird oder nicht. Die Entfernung zwischen der Vorrichtung und dem Fahrzeug und die Richtung, in welcher die Vorrichtung bezogen auf das Fahrzeug angeordnet ist, kann beispielsweise genutzt werden, um zu bestimmen, ob sich ein Benutzer des Fahrzeugs in einer geeigneten Entfernung und an einer geeigneten Position zu dem Fahrzeug befindet. Beispielsweise kann dadurch erkannt werden, ob sich der Benutzer hinreichend nah an dem Fahrzeug befindet, um bestimmte Funktionen des Fahrzeugs auszulösen oder ob sich der Benutzer in einer geeigneten Position relativ zu dem Fahrzeug befindet, um eine autonome Fahraktion des Fahrzeugs genau beobachten zu können. Das Bestimmen der Ausrichtung der Vorrichtung zu dem Fahrzeug, d.h., ob die Vorrichtung beispielsweise in Richtung des Fahrzeugs gehalten wird, kann beispielsweise ausgewertet werden, um zu verhindern, dass eine Fernbedienfunktion des Fahrzeugs unbeabsichtigt ausgelöst wird, weil der Benutzer beispielsweise ein Bedienelement zum Auslösen der Fernbedienfunktion betätigt, während die Vorrichtung in der Tasche des Benutzers ist.

Gemäß der vorliegenden Erfindung wird weiterhin ein Verfahren zum Fernsteuern einer Funktion eines Fahrzeugs über eine Fernsteuervorrichtung bereitgestellt. Bei dem Verfahren wird eine Betätigung eines Bedienelements an der Fernsteuervorrichtung erfasst und eine Position der Fernsteuervorrichtung bezogen auf das Fahrzeug bestimmt, wie es zuvor beschrieben wurde. Eine Nachricht von der Fernsteuervorrichtung zu dem Fahrzeug wird in Abhängigkeit von der Betätigung des Bedienelements und der Position der Fernsteuervorrichtung bezogen auf das Fahrzeug gesendet. Die Nachricht kann beispielsweise eine Anweisung zum Öffnen oder Schließen einer Tür des Fahrzeugs umfassen, in deren Nähe sich die Fernsteuervorrichtung und somit der Benutzer des Fahrzeugs befindet. Insbesondere kann die Funktion des Fahrzeugs ein autonomes Fahren des Fahrzeugs umfassen, welche durch das Senden der Nachricht von der Fernsteuervorrichtung zu dem Fahrzeug aktiviert wird. Insbesondere bei einem autonomen Fahren des Fahrzeugs ist es wichtig sicherzustellen, dass der Benutzer des Fahrzeugs das autonome Fahren des Fahrzeugs überwacht. Dies kann durch die genaue Positionsbestimmung der Fernsteuervorrichtung in Bezug auf das Fahrzeug sichergestellt werden. Insbesondere durch die Bestimmung der Ausrichtung der Fernsteuervorrichtung zu dem Fahrzeug, d.h., indem bestimmt wird, ob die Fernsteuervorrichtung beispielsweise in Richtung des Fahrzeugs ausgerichtet ist, kann sichergestellt werden, dass der Benutzer des Fahrzeugs das autonome Fahren des Fahrzeugs überwacht. Durch die Bestimmung der Entfernung zwischen der Fernsteuervorrichtung und dem Fahrzeug kann sichergestellt werden, dass sich der Benutzer des Fahrzeugs hinreichend nah bei dem Fahrzeug befindet, um das autonome Fahren genau überwachen zu können. Schließlich kann durch die Bestimmung der Richtung, in welcher die Fernsteuervorrichtung bezogen auf das Fahrzeug angeordnet ist, sichergestellt werden, dass die Benutzer einen geeigneten Blickwinkel zu dem autonom fahrenden Fahrzeug hat, um das autonome Fahren überwachen zu können.

Gemäß der vorliegenden Erfindung wird weiterhin eine Vorrichtung bereitgestellt, welche einem Fahrzeug zugeordnet ist. Die Vorrichtung kann beispielsweise die zuvor beschriebene Fernsteuervorrichtung sein, welche beispielsweise in Form eines Funkschlüssels des Fahrzeugs ausgebildet ist. Die Vorrichtung umfasst einen Ultraschallempfänger zum Empfangen von mehreren Ultraschallsignalen von dem zugeordneten Fahrzeug und eine Verarbeitungsvorrichtung. Die Verarbeitungsvorrichtung ist ausgestaltet, eine Position der Vorrichtung bezogen auf das Fahrzeug in Abhängigkeit von den empfangenen Ultraschallsignalen und in Abhängigkeit von mehreren unterschiedlichen Sendepositionen an dem Fahrzeug, welche in der Vorrichtung hinterlegt sind und von welchen die mehreren Ultraschallsignale von dem Fahrzeug ausgesendet werden, und in Abhängigkeit einer vorgegebenen zeitlichen Reihenfolge, mit welcher die Ultraschallsignale von den mehreren unterschiedlichen Sendepositionen an dem Fahrzeug ausgesendet werden, zu bestimmen. Anders ausgedrückt, kennt die Vorrichtung die Sendepositionen von Ultraschallsendern an dem der Vorrichtung zugeordneten Fahrzeug und die zeitliche Reihenfolge, mit welcher die Ultraschallsender angesteuert werden, um die Ultraschallsignale auszusenden. Anhand dieser geometrischen und zeitlichen Informationen kann die Verarbeitungsvorrichtung aus den empfangenen Ultraschallsignalen die Position der Vorrichtung in Bezug auf das Fahrzeug mit hoher Genauigkeit bestimmen. Der Ultraschallempfänger kann darüber hinaus eine Richtungscharakteristik aufweisen, sodass die Vorrichtung zusätzlich bestimmen kann, ob die Vorrichtung in der Empfangsrichtung des Ultraschallempfängers auf das Fahrzeug ausgerichtet ist oder nicht.

Gemäß einer Ausführungsform umfasst die Vorrichtung ferner ein Bedienelement für eine Betätigung durch einen Benutzer des Fahrzeugs und eine Sendevorrichtung zum Übertragen einer Nachricht von der Vorrichtung zu dem Fahrzeug. Die Verarbeitungsvorrichtung erfasst eine Betätigung des Bedienelements und sendet mittels der Sendevorrichtung in Abhängigkeit von der Betätigung des Bedienelements und der Position der Vorrichtung bezogen auf das Fahrzeug eine Nachricht an das Fahrzeug. Die Nachricht kann beispielsweise eine Anweisung zum autonomen Fahren des Fahrzeugs, wie z.B. zum autonomen Einparken in eine Parklücke umfassen. Dabei kann kontinuierlich überprüft werden, ob sich die Vorrichtung in einer geeigneten Position und Ausrichtung zu dem Fahrzeug befindet, um sicherzustellen, dass der Benutzer des Fahrzeugs den autonomen Einparkvorgang überwacht. Ferner kann kontinuierlich überwacht werden, ob das Bedienelement durch den Benutzer des Fahrzeugs betätigt wird. Sobald das Bedienelement nicht mehr betätigt wird oder der Benutzer die Vorrichtung nicht mehr in geeigneter Position und Ausrichtung zu dem Fahrzeug hält, kann der autonome Einparkvorgang abgebrochen werden, indem beispielsweise eine entsprechende Nachricht von der Vorrichtung zu dem Fahrzeug übertragen wird oder eine Nachricht zum Fortsetzen des autonomen Fahrens nicht gesendet wird. Dadurch kann sichergestellt werden, dass der Benutzer des Fahrzeugs den autonomen Einparkvorgang oder einen beliebigen anderen autonomen Fahrvorgang des Fahrzeugs hinreichend überwacht. Durch das kontinuierliche und genaue Überwachen der Position der Vorrichtung und der Ausrichtung der Vorrichtung zu dem Fahrzeug kann eine Totmannschaltung realisiert werden, welche das autonome Fahren sofort abbricht, wenn der Benutzer das autonome Fahren vermutlich nicht ausreichend überwacht. Das autonome Fahren kann neben dem autonomen Einparken in eine Parkposition, einen Parkplatz, eine Garage oder einen Stellplatz auch ein autonomes Hinterherfahren oder Folgen umfassen. Beispielsweise kann das Fahrzeug autonom der Vorrichtung und somit dem Benutzer des Fahrzeugs entlang einem Straßenrand folgen, wie es beispielsweise für ein Fahrzeug eines Briefzustellers oder für ein Müllfahrzeug geeignet sein kann.

Gemäß der vorliegenden Erfindung wird weiterhin ein Fahrzeug mit einer dem Fahrzeug zugeordneten Vorrichtung, wie sie zuvor beschrieben wurde, bereitgestellt. Das Fahrzeug umfasst mehrere Ultraschallsender zum Aussenden von Ultraschallsignalen. Die mehreren Ultraschallsender sind an mehreren unterschiedlichen Sendepositionen angebracht. Das Fahrzeug umfasst weiterhin eine Steuervorrichtung, welche die mehreren Ultraschallsender in der vorgegebenen zeitlichen Reihenfolge ansteuert. Die Ultraschallsender sind an der Außenseite des Fahrzeugs angebracht und dienen zusätzlich als Ultraschallsignalquellen für ein Abstandswarnsystem des Fahrzeugs. Das Abstandswarnsystem kann z.B. eine Einparkhilfe oder ein Abstandswarner im Fahrbetrieb des Fahrzeugs sein. Die Ultraschallsender können beispielsweise rundum das Fahrzeug, insbesondere in der vorderen und hinteren Stoßstange des Fahrzeugs angeordnet sein. Die Positionsbestimmung der Vorrichtung in Bezug auf das Fahrzeug kann beispielsweise durch eine Triangulation und insbesondere durch ein sogenanntes Time-Difference-of-Arrival-Verfahren bestimmt werden. Daher sind vorzugsweise mindestens drei Ultraschallsender an drei unterschiedlichen Stellen des Fahrzeugs vorgesehen. Es können jedoch darüber hinaus eine beliebige Anzahl von Ultraschallsendern an dem Fahrzeug vorgesehen werden, wie es beispielsweise für ein Abstandswarnsystem oder eine Einparkhilfe erforderlich ist. Das Fahrzeug kann ferner zur Durchführung des zuvor beschriebenen Verfahrens und einer seiner Ausführungsformen geeignet sein und umfasst daher auch die zuvor beschriebenen Vorteile.

Das zuvor beschriebene Verfahren ist nicht auf Fahrzeuge, wie Personenkraftwagen oder Lastkraftwagen, beschränkt, sondern kann auch in Verbindung mit Transportfahrzeugen, wie z.B. Gabelstaplern oder beliebigen autonom beweglichen Einrichtungen, wie z.B. Robotern, verwendet werden.

Die vorliegende Erfindung wird nachfolgend unter Bezugnahme auf die Zeichnungen anhand bevorzugter Ausführungsformen erläutert werden.
FIG. 1 zeigt schematisch ein Fahrzeug mit einer dem Fahrzeug zugeordneten Vorrichtung gemäß einer Ausführungsform der vorliegenden Erfindung.
FIG. 2 zeigt Verfahrensschritte eines Verfahrens zum Bestimmen einer Position einer einem Fahrzeug zugeordneten Vorrichtung bezogen auf das Fahrzeug gemäß einer Ausführungsform der vorliegenden Erfindung.
FIG. 3 zeigt schematisch eine Bestimmung einer Position einer einem Fahrzeug zugeordneten Vorrichtung aus Laufzeitunterschieden von empfangenen Ultraschallsignalen gemäß einer Ausführungsform der vorliegenden Erfindung.

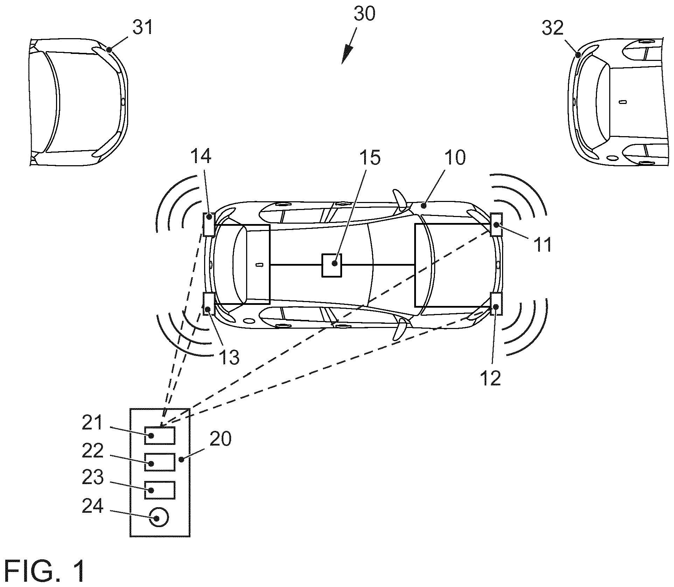

FIG. 1 zeigt ein Fahrzeug 10 und eine dem Fahrzeug 10 zugeordnete Fernsteuervorrichtung 20. Die Fernsteuervorrichtung 20 kann beispielsweise einen Handsender oder einen Funkschlüssel umfassen. Das Fahrzeug 10 umfasst mehrere Ultraschallsender 11-14, welche an vorbestimmten Positionen in dem Fahrzeug 10 angebracht sind. Gesteuert werden die Ultraschallsender 11-14 von einer Steuervorrichtung 15. Die Ultraschallsender 11-14 können beispielsweise Ultraschallsender sein, welche als Ultraschallsignalquellen für ein Abstandswarnsystem, wie z.B. eine Einparkhilfe, ein sogenanntes Park-Distance-Control-System, dienen. In FIG. 1 sind exemplarisch vier Ultraschallsender 11-14 gezeigt. Das Fahrzeug 10 kann jedoch eine beliebige andere Anzahl von Ultraschallsendern aufweisen, beispielsweise vier an der vorderen Stoßstange und vier an der hinteren Stoßstange sowie weitere Ultraschallsender an der Seite des Fahrzeugs.

Die Fernsteuervorrichtung 20 umfasst einen Ultraschallempfänger 21, welcher ausgestaltet ist, Ultraschallsignale, welche von den Ultraschallsendern 11-14 ausgesendet werden, zu empfangen. Die Fernsteuervorrichtung 20 umfasst ferner eine Verarbeitungsvorrichtung 22, eine Sendevorrichtung 23 und ein Bedienelement 24, wie z.B. einen Tastknopf.

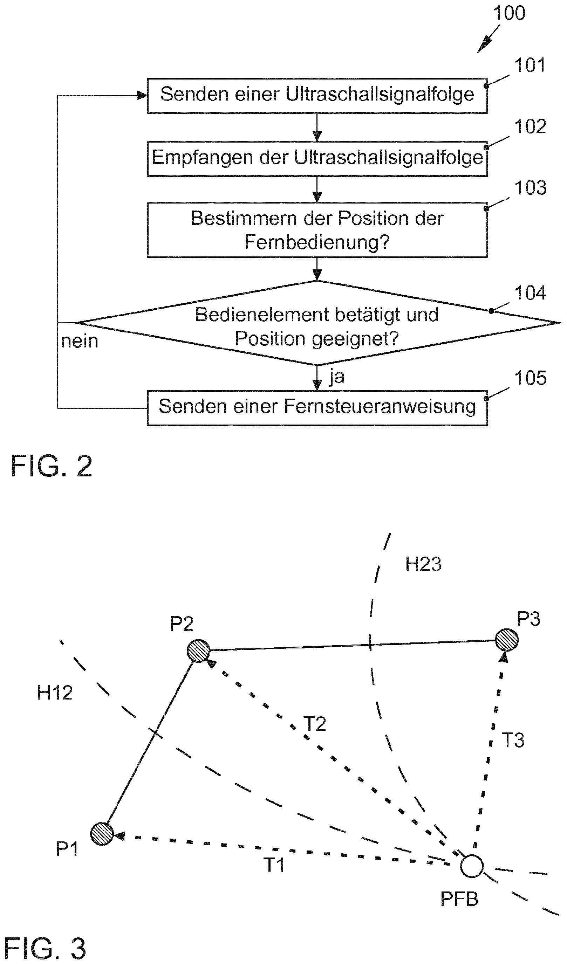

In Verbindung mit FIG. 2 wird nachfolgend beschrieben werden, wie eine Position der Fernsteuervorrichtung 20 relativ zu dem Fahrzeug 10 bestimmt werden kann.

FIG. 2 zeigt dazu ein Verfahren 100, welches die Verfahrensschritte 101-105 verfasst. Im Schritt 101 werden Ultraschallsignale in einer vorgegebenen zeitlichen Reihenfolge von den mehreren Ultraschallsendern 11-14 ausgesendet. Beispielsweise können die Ultraschallsender jeweils einzeln und zu unterschiedlichen Zeiten der Reihe nach angesteuert werden. Im Schritt 102 werden die Ultraschallsignale, d.h., die Ultraschallsignalfolge, mit dem Ultraschallempfänger 21 der Fernsteuervorrichtung 20 empfangen. In der Verarbeitungsvorrichtung 22 der Fernsteuervorrichtung 20 sind die Positionen der Ultraschallsender 11-14 an dem Fahrzeug 10 und die vorgegebene zeitliche Reihenfolge, mit welcher die Ultraschallsender 11-14 ihre Ultraschallsignale ausgeben, hinterlegt. Mit dieser Information und der empfangenen Ultraschallsignalfolge bestimmt die Verarbeitungsvorrichtung 22 im Schritt 103 die Position der Fernsteuervorrichtung 20 in Bezug auf das Fahrzeug 10. Es kann sowohl die Entfernung der Fernsteuervorrichtung 20 zu dem Fahrzeug 10 als auch die Richtung, in welcher die Fernsteuervorrichtung bezogen auf ein dem Fahrzeug zugeordnetes Koordinatensystem angeordnet ist, bestimmt werden. Der Ultraschallempfänger 21 kann darüber hinaus eine Empfangscharakteristik derart aufweisen, dass die Ultraschallsignale nur dann in ausreichender Qualität von den Ultraschallsendern 11-14 empfangen werden können, wenn die Fernbedienungsvorrichtung 20 zumindest in etwa in Richtung auf das Fahrzeug 10 ausgerichtet ist.

Die Positionsbestimmung der Fernbedienungsvorrichtung 20 in Bezug auf das Fahrzeug 10 kann beispielsweise dazu verwendet werden, Türen oder eine Heckklappe des Fahrzeugs 10 durch eine Betätigung des Bedienelements 24 an der Fernsteuervorrichtung 20 zu öffnen oder zu schließen. Abhängig von der Position der Fernsteuervorrichtung 20 zu dem Fahrzeug 10 kann beispielsweise die nächstliegende Tür oder die Heckklappe des Fahrzeugs 10 geöffnet oder geschlossen werden. Eine weitere Anwendung für die Positionsbestimmung ist das ferngesteuerte Aktivieren einer automatischen Einparkfunktion des Fahrzeugs 10, eines sogenannten autonomen Einparkens. Das Fahrzeug 10 soll beispielsweise, wie in FIG. 1 dargestellt, in eine Parklücke 30 zwischen zwei parkenden Fahrzeugen 31 und 32 autonom einparken. Mithilfe der Ultraschallsender 11-14 und entsprechenden Ultraschallempfängern an dem Fahrzeug 10 sowie weiterer Ultraschallsender und Ultraschallempfänger an dem Fahrzeug 10 (welche in der FIG. 1 nicht gezeigt sind) kann das Fahrzeug 10 seine eigene Lage in Bezug auf die parkenden Fahrzeuge 31, 32 und die Parklücke 30 bestimmen. Weiterhin können Kameras an dem Fahrzeug 10 vorgesehen sein, um die Lage des Fahrzeugs 10 zu der Parklücke 30 zu bestimmen. Eine Vorrichtung zum autonomen Einparken bestimmt eine Bewegungsbahn, eine sogenannte Trajektorie, entlang welcher das Fahrzeug in die Parklücke 30 zu bewegen ist. Aus Sicherheitsgründen ist es jedoch vorteilhaft, wenn das autonome Einparken des Fahrzeugs 10 von einem Benutzer des Fahrzeugs 10 überwacht wird und gegebenenfalls schnell und auf einfache Art und Weise unterbrochen werden kann. Dies kann beispielsweise dadurch erreicht werden, dass der autonome Einparkvorgang nur dann ausgeführt wird, wenn der Benutzer des Fahrzeugs sich in einer geeigneten Entfernung und an einer geeigneten Position und in einer geeigneten Ausrichtung zu dem Fahrzeug 10 befindet und während des gesamten autonomen Einparkvorgangs die Fernsteuervorrichtung 20 auf das Fahrzeug 10 richtet und das Bedienelement 24 kontinuierlich betätigt. Dies wird im Schritt 104 überprüft und, wenn sich der Benutzer einschließlich der Fernsteuervorrichtung 20 an einer geeigneten Position befindet und das Bedienelement 24 betätigt ist, wird im Schritt 105 über die Sendevorrichtung 23 eine entsprechende Anweisung zum autonomen Einparken an das Fahrzeug 10 gesendet. Danach wird das Verfahren im Schritt 101 fortgesetzt. Sobald das Bedienelement 24 nicht mehr betätigt wird oder die Fernsteuervorrichtung 20 sich nicht mehr an einer geeigneten Position befindet oder nicht mehr geeignet zu dem Fahrzeug 10 ausgerichtet ist, wird die Fernsteueranweisung nicht mehr an das Fahrzeug 10 gesendet und der autonome Einparkvorgang abgebrochen, wodurch das Fahrzeug 10 angehalten wird. Dadurch wird eine sogenannte Totmannschaltung erreicht, welche das Fahrzeug 10 sofort anhält, wenn nicht mehr sichergestellt ist, dass der autonome Einparkvorgang von dem Benutzer des Fahrzeugs tatsächlich beabsichtigt ist und überwacht wird.

Wie zuvor beschrieben, empfängt der Ultraschallempfänger 21 der Fernsteuervorrichtung 20 die Sendesignale der Ultraschallsender 11-14 des Fahrzeugs. Mittels der unterschiedlichen Laufzeiten der Ultraschallsignale zu dem Ultraschallempfänger kann die Position, d.h., Entfernung und Richtung, zwischen dem Fahrzeug und der Fernsteuervorrichtung 20 berechnet werden. Da jedoch die Sendezeitpunkte, zu denen die Ultraschallsender die Ultraschallsignale abstrahlen, nicht bekannt sind, wird die Differenz zwischen den empfangenen Signalen ausgewertet. Daher können nicht direkt die Abstände zu den Ultraschallsendern bestimmt werden, sondern Hyperbeln zwischen den Sendern ausgewertet werden. Ein derartiges Verfahren ist in FIG. 3 dargestellt. Die Ultraschallsignale werden von drei Positionen P1, P2 und P3, welche den Positionen der Ultraschallsender an dem Fahrzeug entsprechen, ausgesendet. An der Position der Fernsteuervorrichtung PFB kommen die Ultraschallsignale aufgrund ihrer Laufzeit verzögert an. Das Signal von der Position P1 benötigt die Zeit T1 um die Position PFB der Fernsteuervorrichtung zu erreichen. Ein Ultraschallsignal von der Position P2 benötigt die Zeit T2, um die Fernsteuervorrichtung PFB zu erreichen. Ein Ultraschallsignal von der Position P3 benötigt die Zeit T3, um die Fernsteuervorrichtung PFB zu erreichen. Da die zeitliche Abfolge, mit welcher die Ultraschallsignale von den Ultraschallsendern an den Positionen P1-P3 ausgesendet werden, in der Fernsteuervorrichtung PFB hinterlegt ist, kann die Fernsteuervorrichtung PFB anhand der Zeitdifferenzen T1-T2 und T2-T3 jeweils eine Hyperbel bestimmen, auf welcher sich die Fernsteuervorrichtung PFB befinden muss. Aus der Zeitdifferenz T1-T2 wird die Hyperbel H12 bestimmt und aus der Zeitdifferenz T2-T3 die Hyperbel H23. Zusätzlich werden die hinterlegten Positionsinformationen P1, P2 und P3 der Positionen der Ultraschallsender an dem Fahrzeug bei der Bestimmung der Hyperbeln H12 und H23 verwendet. Die Position der Fernsteuervorrichtung PFB befindet sich dann an dem Kreuzungspunkt der Hyperbeln H12 und H23. Das zuvor beschriebene Verfahren zur Positionsbestimmung aus Laufzeitdifferenzen wird auch als Time-Difference-of-Arrival-Verfahren bezeichnet.

Entscheidend für das zuvor beschriebene Verfahren ist daher, dass die Reihenfolge, mit welcher die Ultraschallsignale von den verschiedenen Positionen des Fahrzeugs ausgesendet werden, definiert ist und in der Fernsteuervorrichtung 20 hinterlegt ist. Da übliche Ultraschallsensoren, wie sie beispielsweise für Einparkhilfesysteme verwendet werden, ohnehin sequenziell angesteuert werden, um eine gegenseitige Beeinflussung zu verringern, können diese Ultraschallsensoren auf einfach Art und Weise auch zur Bestimmung der Position der Fernsteuervorrichtung 20 in Bezug auf das Fahrzeug verwendet werden. Ein weiterer Vorteil ist die Richtungsempfindlichkeit des Ultraschallempfängers 21. Richtet der Benutzer die Fernsteuervorrichtung 20 nicht hinreichend direkt auf das Fahrzeug aus, können die Ultraschallsignale von dem Fahrzeug nur schlecht oder gar nicht empfangen werden. Wenn der Benutzer das Fahrzeug fernsteuern möchte, kann durch diese Abhängigkeit bestimmt werden, ob der Benutzer der ferngesteuerten Funktion eine ausreichende Aufmerksamkeit widmet.

## Patentansprüche

1. Verfahren zum Bestimmen einer Position einer einem Fahrzeug zugeordneten Vorrichtung bezogen auf das Fahrzeug, umfassend:
- Aussenden von mehreren Ultraschallsignalen in einer vorgegebenen zeitlichen Reihenfolge, wobei die mehreren Ultraschallsignale von mehreren an unterschiedlichen Sendepositionen (P1-P3) an der Außenseite des Fahrzeugs (10) angebrachten Ultraschallsendern (11-14) ausgesendet werden, wobei die mehreren Ultraschallsender (11-14) zusätzlich als Ultraschallsignalquellen für ein Abstandswarnsystem oder eine Einparkhilfe des Fahrzeugs dienen,
- Empfangen der mehreren Ultraschallsignale an der Vorrichtung (20), und
- Bestimmen der Position der Vorrichtung (20) in Abhängigkeit von den empfangenen Ultraschallsignalen und der vorgegebenen zeitlichen Reihenfolge.

2. Verfahren nach Anspruch 1, **dadurch gekennzeichnet, dass** an jeder der mehreren Sendepositionen (P1-P3) jeweils ein Ultraschallsender (11-14) angeordnet ist, wobei das Aussenden der mehreren Ultraschallsignale ein Ansteuern der Ultraschallsender (11-14) in der vorgegebenen zeitlichen Reihenfolge umfasst.

3. Verfahren nach Anspruch 2, **dadurch gekennzeichnet, dass** die vorgegebene zeitliche Reihenfolge derart ausgestaltet ist, dass die Ultraschallsender (11-14) einzeln und zu unterschiedlichen Zeiten angesteuert werden.

4. Verfahren nach einem der vorhergehenden Ansprüche, **dadurch gekennzeichnet, dass** das Bestimmen der Position der Vorrichtung (20) mindestens eine Bestimmung aus einer Gruppe von Bestimmungen umfasst, wobei die Gruppe von Bestimmungen besteht aus:
- Bestimmung einer Entfernung zwischen der Vorrichtung (20) und dem Fahrzeug (10),
- Bestimmen einer Richtung, in welcher die Vorrichtung (20) bezogen auf ein dem Fahrzeug (10) zugeordnetes Koordinatensystem angeordnet ist, und
- Bestimmen einer Ausrichtung der Vorrichtung (20) bezogen auf eine Richtung von der Vorrichtung zu dem Fahrzeug (10).

5. Verfahren zum Fernsteuern einer Funktion eines Fahrzeugs über eine Fernsteuervorrichtung, **gekennzeichnet durch**:
- Erfassen einer Betätigung eines Bedienelements (24) an der Fernsteuervorrichtung (20),
- Bestimmen einer Position der Fernsteuervorrichtung (20) bezogen auf das Fahrzeug (10) nach einem der vorhergehenden Ansprüche, und
- Senden einer Nachricht von der Fernsteuervorrichtung (20) zu dem Fahrzeug (10) in Abhängigkeit von der Betätigung des Bedienelements (24) und der Position der Fernsteuervorrichtung (20) bezogen auf das Fahrzeug (10).

6. Verfahren nach Anspruch 5, **dadurch gekennzeichnet, dass** die Funktion des Fahrzeugs (10) ein autonomes Fahren des Fahrzeugs (10) umfasst.

7. Fahrzeug mit einer dem Fahrzeug zugeordneten Vorrichtung,
wobei die Vorrichtung umfasst:
- einen Ultraschallempfänger (21) zum Empfangen von mehreren Ultraschallsignalen von dem zugeordneten Fahrzeug (10), und
- eine Verarbeitungsvorrichtung (22), welche ausgestaltet ist, eine Position der Vorrichtung (20) bezogen auf das Fahrzeug (10) in Abhängigkeit von den empfangenen Ultraschallsignalen und in Abhängigkeit von in der Vorrichtung (20) hinterlegten mehreren unterschiedlichen Sendepositionen (P1-P3) an dem Fahrzeug (10) und einer vorgegebenen zeitlichen Reihenfolge, mit welcher die Ultraschallsignale von dem Fahrzeug (10) ausgesendet werden, zu bestimmen,
wobei das Fahrzeug (10) umfasst:
- mehrere Ultraschallsender (11-14) zum Aussenden von Ultraschallsignalen, wobei die mehreren Ultraschallsender (11-14) an den mehreren unterschiedlichen Sendepositionen (P1-P3) an der Außenseite des Fahrzeugs (10) angebracht sind und zusätzlich als Ultraschallsignalquellen für ein Abstandswarnsystem oder eine Einparkhilfe des Fahrzeugs dienen, und
- eine Steuervorrichtung (15), welche ausgestaltet ist, die mehreren Ultraschallsender (11-14) in der vorgegebenen zeitlichen Reihenfolge anzusteuern.

8. Fahrzeug mit einer dem Fahrzeug zugeordneten Vorrichtung nach Anspruch 7, **dadurch gekennzeichnet, dass** die Vorrichtung ferner umfasst:
- ein Bedienelement (24) für eine Betätigung durch einen Benutzer des Fahrzeugs (10), und
- eine Sendevorrichtung (23) zum Übertragen einer Nachricht von der Vorrichtung (20) zu dem Fahrzeug (10),
wobei die Verarbeitungsvorrichtung (22) ausgestaltet ist, eine Betätigung des Bedienelements (24) zu erfassen und eine Nachricht mittels der Sendevorrichtung (23) in Abhängigkeit von der Betätigung des Bedienelements (24) und der Position der Vorrichtung (20) bezogen auf das Fahrzeug (10) zu übertragen.

## Claims

1. Method for determining a position of an apparatus associated with a vehicle in relation to the vehicle, comprising:
- transmitting multiple ultrasonic signals in a prescribed temporal order, wherein the multiple ultrasonic signals are transmitted by multiple ultrasonic transmitters (11-14) mounted at different transmission positions (P1-P3) on the outside of the vehicle (10), the multiple ultrasonic transmitters (11-14) additionally being used as ultrasonic signal sources for a distance warning system or a parking aid of the vehicle,
- receiving the multiple ultrasonic signals at the apparatus (20), and
- determining the position of the apparatus (20) on the basis of the received ultrasonic signals and the prescribed temporal order.

2. Method according to Claim 1, **characterized in that** an ultrasonic transmitter (11-14) is respectively arranged at each of the multiple transmission positions (P1-P3), wherein the transmitting of the multiple ultrasonic signals comprises actuating the ultrasonic transmitters (11-14) in the prescribed temporal order.

3. Method according to Claim 2, **characterized in that** the prescribed temporal order is configured such that the ultrasonic transmitters (11-14) are actuated individually and at different times.

4. Method according to one of the preceding claims, **characterized in that** the determining of the position of the apparatus (20) comprises at least one determination from a group of determinations, wherein the group of determinations consists of:
- determination of a distance between the apparatus (20) and the vehicle (10),
- determining a direction in which the apparatus (20) is arranged in relation to a coordinate system associated with the vehicle (10), and
- determining an orientation of the apparatus (20) in relation to a direction from the apparatus to the vehicle (10).

5. Method for remotely controlling a function of a vehicle using a remote control apparatus, **characterized by**:
- sensing operation of an operator control element (24) on the remote control apparatus (20),
- determining a position of the remote control apparatus (20) in relation to the vehicle (10) according to one of the preceding claims, and
- sending a message from the remote control apparatus (20) to the vehicle (10) on the basis of the operation of the operator control element (24) and the position of the remote control apparatus (20) in relation to the vehicle (10).

6. Method according to Claim 5, **characterized in that** the function of the vehicle (10) comprises autonomous driving of the vehicle (10).

7. Vehicle having an apparatus associated with the vehicle,
wherein the apparatus comprises:
- an ultrasonic receiver (21) for receiving multiple ultrasonic signals from the associated vehicle (10), and
- a processing apparatus (22) that is configured to determine a position of the apparatus (20) in relation to the vehicle (10) on the basis of the received ultrasonic signals and on the basis of multiple different transmission positions (P1-P3), stored in the apparatus (20), on the vehicle (10) and a prescribed temporal order in which the ultrasonic signals are transmitted by the vehicle (10),
wherein the vehicle (10) comprises:
- multiple ultrasonic transmitters (11-14) for transmitting ultrasonic signals, wherein the multiple ultrasonic transmitters (11-14) are mounted at the multiple different transmission positions (P1-P3) on the outside of the vehicle (10) and are additionally used as ultrasonic signal sources for a distance warning system or a parking aid of the vehicle, and
- a control apparatus (15) that is configured to actuate the multiple ultrasonic transmitters (11-14) in the prescribed temporal order.

8. Vehicle having an apparatus associated with the vehicle according to Claim 7, **characterized in that** the apparatus further comprises:
- an operator control element (24) for operation by a user of the vehicle (10), and
- a transmission apparatus (23) for transmitting a message from the apparatus (20) to the vehicle (10),
wherein the processing apparatus (22) is configured to sense operation of the operator control element (24) and to transmit a message by means of the transmission apparatus (23) on the basis of the operation of the operator control element (24) and the position of the apparatus (20) in relation to the vehicle (10).

## Revendications

1. Procédé pour déterminer une position d'un dispositif associé à un véhicule par rapport au véhicule, comprenant :
- l'émission de multiples signaux ultrasonores dans un ordre temporel prédéterminé, dans lequel les multiples signaux ultrasonores sont émis par de multiples émetteurs à ultrasons (11-14) montés en différentes positions d'émission (P1-P3) sur la face extérieure du véhicule (10), dans lequel les multiples émetteurs à ultrasons (11-14) sont en outre utilsés en tant que sources de signaux ultrasonores pour un système d'alerte de distance ou pour une assistance au stationnement du véhicule,
- la réception des multiples signaux ultrasonores sur le dispositif (20), et
- la détermination de la position du dispositif (20) en fonction des signaux ultrasonores reçus et de l'ordre temporel prédéterminé.

2. Procédé selon la revendication 1, **caractérisé en ce qu'**un émetteur à ultrasons (11-14) est respectivement disposé en chacune des multiples positions d'émission (P1-P3), dans lequel l'émission des multiples signaux ultrasonores comprend une commande des émetteurs à ultrasons (11-14) dans l'ordre temporel prédéterminé.

3. Procédé selon la revendication 2, **caractérisé en ce que** l'ordre temporel prédéterminé est configuré de manière à ce que les émetteurs à ultrasons (11-14) soient commandés individuellement et à des instants différents.

4. Procédé selon l'une quelconque des revendications précédentes, **caractérisé en ce que** la détermination de la position du dispositif (20) comprend au moins une détermination appartenant à un groupe de déterminations, dans lequel le groupe de déterminations comprend :
- la détermination d'une distance entre le dispositif (20) et le véhicule (10),
- la détermination d'une direction dans laquelle le dispositif (20) est agencé par rapport à un système de coordonnées associé au véhicule (10), et
- la détermination d'une orientation du dispositif (20) par rapport à une direction allant du dispositif vers le véhicule (10).

5. Procédé pour la commande à distance d'une fonction d'un véhicule par l'intermédiaire d'un dispositif de commande à distance, **caractérisé par** :
- la détection d'un actionnement d'un élément de commande (24) sur le dispositif de commande à distance (20),
- la détermination d'une position du dispositif de commande à distance (20) par rapport au véhicule (10) selon l'une quelconque des revendications précédentes, et
- l'envoi d'un message du dispositif de commande à distance (20) vers le véhicule (10) en fonction de l'actionnement de l'élément de commande (24) et de la position du dispositif de commande à distance (20) par rapport au véhicule (10).

6. Procédé selon la revendication 5, **caractérisé en ce que** la fonction du véhicule (10) comprend une conduite autonome du véhicule (10).

7. Véhicule comportant un dispositif associé au véhicule, dans lequel le dispositif comprend :
- un récepteur d'ultrasons (21) destiné à recevoir de multiples signaux ultrasonores du véhicule associé (10), et
- un dispositif de traitement (22) qui est conçu pour déterminer une position du dispositif (20) par rapport au véhicule (10) en fonction des signaux ultrasonores reçus et en fonction de multiples positions d'émission différentes (P1-P3) au niveau du véhicule (10) stockées dans le dispositif (20) et d'un ordre temporel prédéterminé dans lequel les signaux ultrasonores sont émis par le véhicule (10), dans lequel le véhicule (10) comprend :
- de multiples émetteurs à ultrasons (11-14) destinés à émettre des signaux ultrasonores, dans lequel les multiples émetteurs à ultrasons (11-14) sont montés aux multiples positions d'émission différentes (P1-P3) sur la face extérieure du véhicule (10) et sont en outre utilsés en tant que sources de signaux ultrasonores pour un système d'alerte de distance ou pour une assistance au stationnement du véhicule, et
- un dispositif de commande (15) qui est conçu pour commander les multiples émetteurs à ultrasons (11- 14) dans l'ordre temporel prédéterminé.

8. Véhicule comportant un dispositif associé au véhicule selon la revendication 7, **caractérisé en ce que** le dispositif comprend en outre :
- un élément de commande (24) destiné à être actionné par un utilisateur du véhicule (10), et
- un dispositif d'émission (23) destiné à transmettre un message du dispositif (20) vers le véhicule (10), dans lequel le dispositif de traitement (22) est conçu pour détecter un actionnement de l'élément de commande (24) et pour transmettre un message au moyen du dispositif d'émission (23) en fonction de l'actionnement de l'élément de commande (24) et de la position du dispositif (20) par rapport au véhicule (10) .
